# EUROPÄISCHE PATENTSCHRIFT

(11) **EP 2 559 356 B1**
(45) Veröffentlichungstag und Bekanntmachung des Hinweises auf die Patenterteilung: **24.02.2016**
(21) Anmeldenummer: 12179863.1
(22) Anmeldetag: 09.08.2012
(51) Int. Cl.: A47B 91/02, D06F 39/12, F16M 7/00, A47L 15/42

(54) **Fuß für ein Haushaltsgerät und Haushaltsgerät**
Foot for a household appliance and household appliance
Pied pour un appareil ménager et appareil ménager

(30) Priorität: 16.08.2011 DE 102011081032
(43) Veröffentlichungstag der Anmeldung: 20.02.2013
(73) Patentinhaber: BSH Hausgeräte GmbH, 81739 München (DE)
(72) Erfinder: Dykhuis, Matthias, 89407 Dillingen (DE); Grohmann, Florian, 89407 Dillingen (DE); Kiechle, Franz, 89312 Günzburg (DE); Rehm, Karlheinz, 89561 Dischingen (DE); Semerad, David, 89353 Glött (DE)

(56) Entgegenhaltungen:
- EP-A1- 1 802 216
- FR-A1- 2 437 812
- FR-A1- 2 494 398
- US-A1- 2011 148 259

## Beschreibung

Die vorliegende Erfindung betrifft einen Fuß für ein Haushaltsgerät mit einem Gewinde, welches zur Ausrichtung des Haushaltsgeräts in ein Gegengewinde desselben ein- und aus diesem ausschraubbar ist, und mit einer Basis zum Abstützen des Haushaltsgeräts an einem Boden, welche mit dem Gewinde drehfest verbunden ist und einen Grundkörper mit mehreren Vorsprüngen aufweist, die von dem Grundkörper abstehen. Weiterhin betrifft die vorliegende Erfindung ein Haushaltsgerät mit mindestens einem derartigen Fuß.

Ein derartiger Fuß für ein Haushaltsgerät ist beispielsweise aus der Druckschrift US 2011/0148259 A1 bekannt. Der offenbarte Fuß weist einen als Teller ausgebildeten Grundkörper mit mehreren von dem Grundkörper abstehenden Vorsprüngen auf, wobei zwischen benachbarten Vorsprüngen jeweils eine Aussparung vorgesehen ist. Die jeweilige Aussparung und somit auch die jeweilige Außenkontur der beiden benachbarten Vorsprünge weist eine stetige Aussparungskontur bzw. Außenkontur ohne jegliche parallele Flächen auf. Die jeweilige Aussparung eignet sich dadurch zum Einsetzen eines Schraubendrehers mit divergenten Arbeitsflächen.

Üblicherweise befinden sich bei der Auslieferung des Haushaltsgeräts die Füße im eingeschraubten Zustand. Um das Haushaltsgerät nun für eine jeweilige Gebrauchsstellung gemäß dem Kundenwunsch auszurichten, muss der Kunde die Füße auf die notwendige Position herausschrauben. Zur Überwindung des Ausschraubmoments wird herkömmlicherweise ein bereits erwähnter Schraubendreher verwendet. Es hat sich jedoch herausgestellt, dass für die Betätigung des Schraubendrehers ein hoher Kraftaufwand nötig ist.

Vor diesem Hintergrund besteht eine Aufgabe der vorliegenden Erfindung darin, einen Fuß für ein Haushaltsgerät bereitzustellen, welcher sich insbesondere einfach aus- und/oder ausschrauben lässt.

Daher wird ein Fuß für ein Haushaltsgerät mit einem Gewinde und einer Basis zum Abstützen des Haushaltsgeräts an einem Boden vorgeschlagen. Das Gewinde ist zur Ausrichtung des Haushaltsgeräts in ein Gegengewinde desselben ein- und aus diesem ausschraubbar. Die Basis ist mit dem Gewinde drehfest verbunden und weist einen Grundkörper mit mehreren Vorsprüngen auf, welche von dem Grundkörper abstehen. Die Vorsprünge weisen eine jeweilige Außenkontur mit planparallelen Seitenflächen zum Ineingriffbringen mit einem Gabelschlüssel für das Ein- und Ausschrauben des Gewindes auf. Die planparallelen Seitenflächen eines jeweiligen Vorsprungs weisen einen Abstand im Bereich von 8 bis 20 mm auf, wobei der Abstand also der Maulbreite des zu verwendenden Gabelschlüssels entspricht.

An den Vorsprüngen mit planparallelen Seitenflächen lässt sich das Maul eines Gabelschlüssels gut und zuverlässig ansetzen, mit welchem es erheblich einfacher ist, ein großes Ausschraubmoment aufzubringen, als mit einem Schraubendreher. Gleiches gilt natürlich in analoger Weise für das Einschrauben des jeweiligen Fußes.

Gemäß einer bevorzugten Weiterbildung sind drei bis acht, bevorzugt vier bis sechs der Vorsprünge vorgesehen. Dadurch ist sichergestellt, dass in einer Vielzahl von Drehstellungen des jeweiligen Fußes jeweils ein Vorsprung zum Ineingriffbringen mit einem Gabelschlüssel bereitsteht, wenn die Zugänglichkeit der Basis des jeweiligen Fußes nur aus einer bestimmten Richtung - zum Beispiel aufgrund der gegebenen Einbausituation in dem Boden des Haushaltsgeräts - möglich ist.

Die Vorsprünge sind insbesondere in Umfangsrichtung in Bezug auf eine Drehachse des Gewindes gleichmäßig verteilt vorgesehen. Somit wird sichergestellt, dass auch dann, wenn lediglich eine Zugänglichkeit der Basis aus einer bestimmten Richtung gegeben ist, immer wenigstens ein Vorsprung mittels des Gabelschlüssels erreichbar ist.

Gemäß einer weiteren bevorzugten Weiterbildung weisen die Vorsprünge jeweils eine von dem Gewinde abgewandte Grundfläche auf, die sich in Richtung des Gewindes krümmt. Sie weisen von dem Schaft des jeweiligen Fußes in Richtung dessen Basis gesehen jeweils eine konkave Grundfläche auf. Dadurch wird sichergestellt, dass die Füße problemlos über Unebenheiten des Bodens, insbesondere Kanten, beispielsweise Fliesenkanten, gleiten können.

Gemäß einer weiteren bevorzugten Weiterbildung weist die Basis eine Stellfläche für das Abstützen des Haushaltsgeräts auf dem Boden auf, an welche sich eine jeweilige Grundfläche eines Vorsprungs anschließt. Dadurch ergibt sich eine vergleichsweise große Auflagefläche für den jeweiligen Fuß, welche für einen zuverlässigen Stand des Haushaltsgeräts sorgt. Da die Stellfläche insbesondere zentrisch zur Drehachse des jeweiligen Fußes liegt, ist eine ausreichend hohe Standsicherheit und Festigkeit des Fußes sichergestellt.

Gemäß einer weiteren bevorzugten Weiterbildung weist der Grundkörper die Stellfläche auf. Dadurch ergibt sich ein einfacher Aufbau. Insbesondere lässt sich der Grundkörper einstückig mit den Vorsprüngen ausbilden.

Alternativ können die Vorsprünge auch gemeinsam ein Bauteil und der Grundkörper ein weiteres Bauteil ausbilden, welche miteinander zum Bilden der Basis zusammengefügt werden.

Gemäß einer weiteren bevorzugten Ausgestaltung weist der Grundkörper einen runden oder eckigen, insbesondere drei-, vier-, fünf- oder sechseckigen Querschnitt auf, wobei bevorzugt jeder der Ecken ein Vorsprung zugeordnet ist. Die Vorsprünge weisen in diesem Fall jeweils in Bezug auf eine Drehachse des Gewindes radial weg von dem Grundkörper. Indem die Vorsprünge den jeweiligen Ecken zugeordnet sind, sind die Vorsprünge geeignet voneinander beabstandet, um mit dem Gabelschlüssel in Eingriff gebracht zu werden. Das heißt, zwischen den Vorsprüngen ist ausreichend Platz für die das Maul bildenden Zinken des Gabelschlüssels. Zwischen je zwei in Umfangsrichtung des Fußes benachbarten Vorsprüngen ist somit eine Lücke derart vorgesehen, dass dort ausreichend Platz zum Einsetzen eines Zinkens eines Gabelschlüssels vorhanden ist. Insbesondere ist die jeweilige Außenkontur des jeweiligen Vorsprungs derart gewählt, dass diese der Innenkontur des Gabelschlüssels zumindest an dessen beiden Zinkenabschnitten mit den etwa planflächigen Anlageflächen entspricht. Jeder Vorsprung kann somit mit dem Maul eines Gabelschlüssels umgriffen werden, wobei dessen beiden Zinken in die beiden Lücken zu beiden Seiten des jeweiligen Vorsprungs eingreifen.

Gemäß einer weiteren bevorzugten Weiterbildung weisen die Vorsprünge zusätzlich jeweils einen Schlitz auf, welcher mit einer Klinge eines Schraubendrehers für das Einund Ausschrauben des Gewindes in Eingriff bringbar ist. Durch diese Ausgestaltung lässt sich der Fuß wahlweise mit dem Gabelschlüssel oder dem Schraubendreher für das Ein- und Ausschrauben drehen. Beispielsweise kann es bestimmte Situationen geben, in welchen beispielsweise aufgrund von Platzverhältnissen die Verwendung eines Gabelschlüssels nicht möglich ist. In diesen Situationen kann der Kunde dann auf die Betätigung mittels eines Schraubendrehers zurückgreifen. Insbesondere ist der Schlitz an der Stirnseite des jeweiligen Vorsprungs vorgesehen, so dass er für einen Schraubendreher von außen gut zugänglich ist. Ferner lässt sich dadurch mittels des Schraubendrehers ein ausreichendes Drehmoment zum Ein- und/oder Ausschrauben des Fußes ausüben.

Gemäß einer weiteren bevorzugten Ausgestaltung erstreckt sich ein jeweiliger Schlitz radial in Bezug auf eine Drehachse des Gewindes. Dadurch lässt sich der Schraubendreher einfach an dem Fuß ansetzen, wobei sich die Klinge des Schraubendrehers in den Schlitz hinein erstreckt.

Gemäß einer weiteren bevorzugten Weiterbildung erstreckt sich ein jeweiliger Schlitz mittig in einem jeweiligen Vorsprung. Dadurch lässt sich das einen jeweiligen Schlitz umgebende Material des Vorsprungs ausreichend stabil gestalten, um dem einwirkenden Drehmoment des Schraubendrehers entgegenwirken zu können.

Gemäß einer weiteren bevorzugten Weiterbildung ist ein Boden vorgesehen, welcher mit dem Gegengewinde gebildet ist. Dadurch lässt sich der Fuß einfach in den Boden des Haushaltsgeräts insbesondere von unten einschrauben.

Gemäß einer weiteren bevorzugten Weiterbildung mündet das Gegengewinde in eine Aussparung in dem Boden, so dass der Fuß in das Gegengewinde derart einschraubbar ist, dass die Basis zumindest teilweise in der Aussparung versenkbar ist. Die in der Aussparung versenkte Basis stört somit während eines Transport des Haushaltsgeräts insbesondere zum Kunden nicht. Bevorzugt ist die Aussparung mit einem seitlichen Zugang ausgebildet, so dass die Basis in ihren versenkten Zustand von einer Seite des Haushaltsgeräts her mit dem Gabelschlüssel und gegebenenfalls mit dem Schraubendreher erreichbar ist.

Gemäß einer weiteren bevorzugten Weiterbildung wirken das Gewinde und das Gegengewinde selbsthemmend zusammen. Dadurch schraubt sich das Gewinde nicht von selbst in das Gegengewinde, wenn diese eine Last in ihrer Längsrichtung aufnehmen. Vielmehr kommt es nur dann zu einem Verdrehen des Gewindes und Gegengewindes zueinander, wenn eine Betätigung mittels des Gabelschlüssels oder Schraubendrehers erfolgt.

Gemäß einer weiteren bevorzugten Weiterbildung ist das Haushaltsgerät als Geschirrspüler, Herd, Kühlgerät oder Waschmaschine ausgebildet.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Es zeigen dabei:
- Fig. 1: in perspektivischer Ansicht ein Haushaltsgerät gemäß einem vorteilhaften Ausführungsbeispiel;
- Fig. 2: in perspektivischer Ansicht einen Fuß gemäß einem vorteilhaften Ausführungsbeispiel;
- Fig. 3: in perspektivischer Ansicht einen Fuß gemäß einem weiteren vorteilhaften Ausführungsbeispiel;
- Fig. 4: eine Ansicht I aus Fig. 1; und
- Fig. 5: eine Ansicht II aus Fig. 1.

In den Figuren sind gleiche oder funktionsgleiche Elemente mit denselben Bezugszeichen versehen worden, soweit nichts anderes angegeben ist.

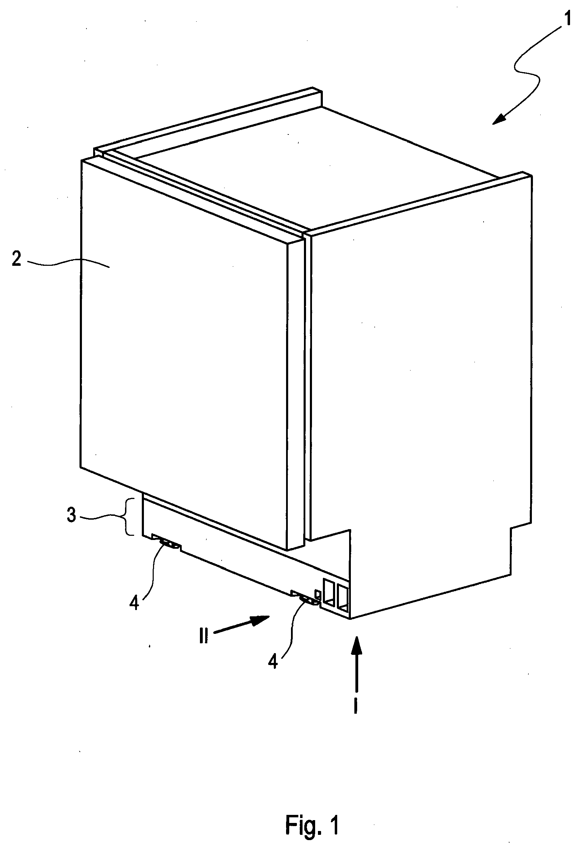

Fig. 1 zeigt in perspektivischer Ansicht von vorne betrachtet ein Haushaltsgerät 1, welches beispielsweise als Geschirrspüler ausgebildet ist.

Das Haushaltsgerät 1 umfasst einen Gerätekorpus 2. An einem Boden 3 des Gerätekorpus 2 sind mehrere Füße 4, insbesondere drei oder vier Füße 4, angeordnet. Aufgrund der Ansicht sind jedoch in Fig. 1 lediglich zwei der Füße 4 zu erkennen. Die Füße 4 dienen der Ausrichtung des Haushaltsgeräts 1 gegenüber einem nicht dargestellten Fußboden.

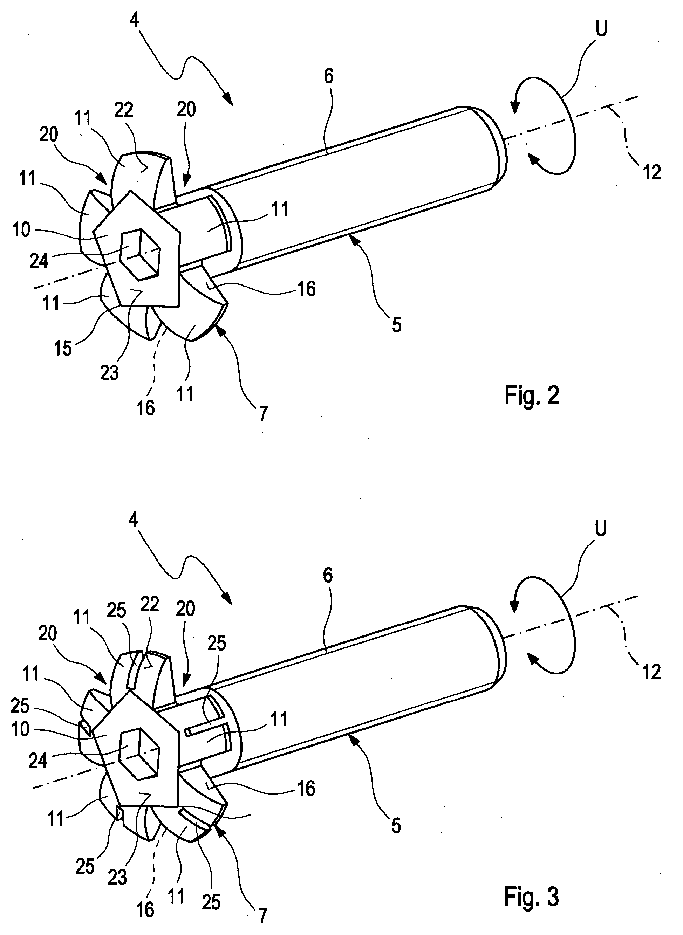

Fig. 2 illustriert in einer perspektivischen Ansicht einen solchen Fuß 4 gemäß einem Ausführungsbeispiel.

Der Fuß 4 umfasst einen Schaft 5, welcher ein Gewinde 6 trägt. Das Gewinde 6 ist zur Ausrichtung des Haushaltsgeräts 1 in ein in Fig. 1 nicht dargestelltes Gegengewinde in dem Boden 3 des Haushaltsgeräts 1 ein- und aus diesem ausschraubbar. Der Boden 3 des Haushaltsgeräts ist üblicherweise durch einen so genannten Basisträger oder eine Bodenbaugruppe gebildet, die der Aufnahme von Funktionskomponenten wie zum Beispiel Pumpen, Heizung, Steuer-/Regeleinrichtung, und so weiter des Haushaltsgeräts dient. Im Fall einer Geschirrspülmaschine ist der Boden 3 unterhalb des Spülbehälters der Geschirrspülmaschine angeordnet.

Der Fuß 4 umfasst weiterhin eine Basis 7 zum Abstützen des Haushaltsgeräts 1 an dem Boden. Die Basis 7 weist einen Grundkörper 10 sowie mehrere Vorsprünge 11 auf. Ohne Einschränkung der Allgemeinheit sind in dem Ausführungsbeispiel fünf Vorsprünge 11 vorgesehen. Diese stehen von dem Grundkörper 10 radial in Bezug auf eine Drehachse 12 des Gewindes 6 ab. Der Grundkörper 10 ist mit dem Schaft 5 drehfest verbunden. Dazu kann der Grundkörper 10 mit dem Schaft 5 einstückig ausgebildet sein. Der Grundkörper 10 ist allgemein betrachtet als Vieleck ausgebildet. Jeder Ecke des Vielecks ist ein sich (bezüglich der Drehachse des Fußes) radial nach außen erstreckender Vorsprung 11 zugeordnet.

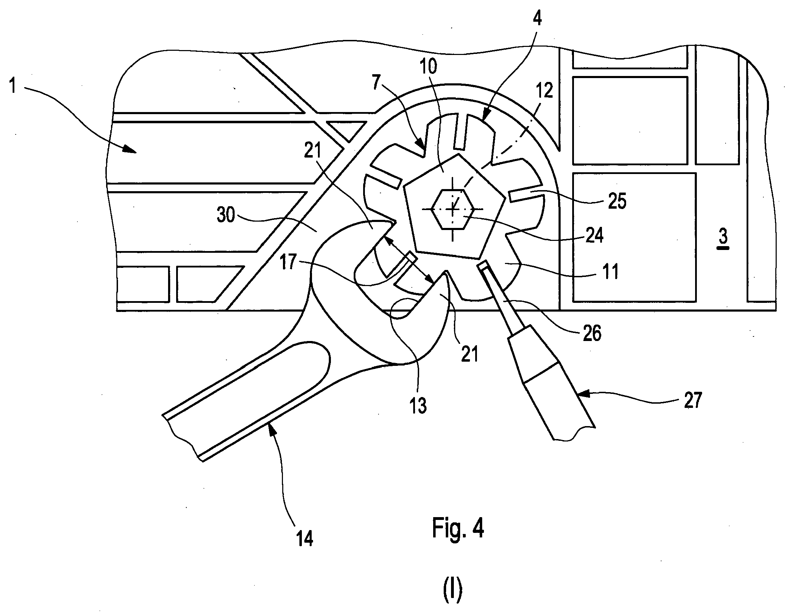

Die Vorsprünge 11 sind dazu ausgebildet, jeweils mit dem Maul 13 eines in Fig. 4 dargestellten Gabelschlüssels 14 in Eingriff gebracht zu werden. Fig. 4 zeigt dabei eine Ansicht I aus Fig. 1. Mittels des Gabelschlüssels 14 lässt sich dann, wie in Fig. 4 zu erkennen, der Fuß 4 um seine Drehachse 12 drehen, um den Fuß 4 in das Gegengewinde in dem Boden 3 des Haushaltsgeräts 1 ein- oder aus diesem auszuschrauben.

Nun zurückkehrend zu Fig. 2 ist dort gezeigt, dass der Grundkörper 10 einen Vieleckigen, hier insbesondere einen fünfeckigen Querschnitt aufweist. Eine der Ecken ist beispielhaft mit dem Bezugszeichen 15 bezeichnet. Gemäß dem Ausführungsbeispiel ist ein jeweiliger Vorsprung 11 derart angeordnet, dass er mittig auf einer jeweiligen Ecke 15 des Grundkörpers 10 sitzt.

Der Grundkörper 10 und die Vorsprünge 11 können einstückig ausgebildet sein.

Alternativ können die Vorsprünge 11 ein separates Teil bilden, welches mit dem Grundkörper 10, welcher wiederum für sich ein separates Teil bildet, verbunden ist. Beispielsweise kann der Grundkörper 10 mit dem entsprechenden Bauteil, welches die Vorsprünge 11 umfasst, form-, kraft- oder stoffschlüssig verbunden sein.

Ein jeweiliger Vorsprung 11 umfasst planparallele Seitenflächen 16. Dies ist beispielhaft anhand eines Vorsprungs 11 gezeigt, dessen eine Seitenfläche 16 nicht sichtbar ist, weshalb diese mit einer gestrichelten Bezugszeichenlinie bezeichnet ist. Der Abstand 17 der Seitenflächen 16 entspricht der Maulbreite des zu verwendenden Gabelschlüssels 14, siehe Fig. 4. Die Vorsprünge 11 sind in der Umfangsrichtung U in Bezug auf die Drehachse 12 gleichmäßig voneinander beabstandet angeordnet, so dass sich zwischen den Seitenflächen 16 von je zwei in Umfangsrichtung nebeneinander angeordneten Vorsprüngen 11 jeweils eine Ausnehmung 20 ergibt. Jeder Vorsprung 11 ist zu beiden Seiten durch eine Ausnehmung beziehungsweise eine Lücke 20 von dem in Umfangsrichtung benachbarten Vorsprung separiert. In die beiden Ausnehmungen zu beiden Seiten des jeweiligen Vorsprungs können die das Maul 13 bildenden, sich gegenüberliegenden Zinken 21 des Gabelschlüssels 14 eingreifen, siehe Fig. 4.

Weiterhin ist ein jeweiliger Vorsprung 11 mit einer Grundfläche 22 gebildet, welche an der Seite eines jeweiligen Vorsprungs 11 ausgebildet ist, die von dem Gewinde 6 abgewandt ist. Eine jeweilige Grundfläche 22 krümmt sich in einer Richtung nach radial außen in Bezug auf die Drehachse 12 hin zu dem Gewinde 6 und schließt radial innen in Bezug auf die Drehachse 12 an einer Stellfläche 23 des Grundkörpers 10 an.

Damit ergibt sich für die Basis 7 eine Gestalt, deren Umhüllende der Form eines Pilzkopfs entspricht.

In dem Grundkörper 10 kann mittig eine Ausnehmung 24 vorgesehen sein, welche für einen Eingriff eines Inbusschlüssels geeignet ausgebildet ist. Somit lässt sich der Fuß 4 auch mittels Betätigung mit einem Inbusschlüssel (nicht dargestellt) um die Drehachse 12 drehen, wenn der Fuß von seiner Unterseite her frei zugänglich ist.

Fig. 3 zeigt in perspektivischer Ansicht einen Fuß 4 gemäß einem weiteren Ausführungsbeispiel.

Der Fuß 4 gemäß Fig. 3 unterscheidet sich von dem Fuß 4 gemäß Fig. 2 dadurch, dass ein jeweiliger Vorsprung frontseitig einen sich in radialer Richtung (bezogen auf die Drehachse 12) erstreckenden Schlitz 25 aufweist. Ein jeweiliger Schlitz 25 ist mit einer Klinge 26 eines Schraubendrehers 27 in Eingriff bringbar, siehe Fig. 4. Somit lässt sich der Fuß 4 auch mittels Betätigung mit einem Schraubendreher 27 um die Drehachse 12 drehen und damit ein- und ausschrauben.

Ein jeweiliger Schlitz 25 erstreckt sich radial in Bezug auf die Drehachse 12 und ist mittig in einem jeweiligen Vorsprung 11 angeordnet. "Mittig" meint hier mittig in Bezug auf die jeweiligen Seitenflächen 16 des entsprechenden Vorsprungs 11. Nicht jeder der Vorsprünge 11 muss zwangsläufig einen solchen Schlitz 25 aufweisen. Beispielsweise kann keiner oder auch nur jeder zweite Vorsprung 11 in Bezug auf die Umfangsrichtung U einen solchen Schlitz 25 aufweisen.

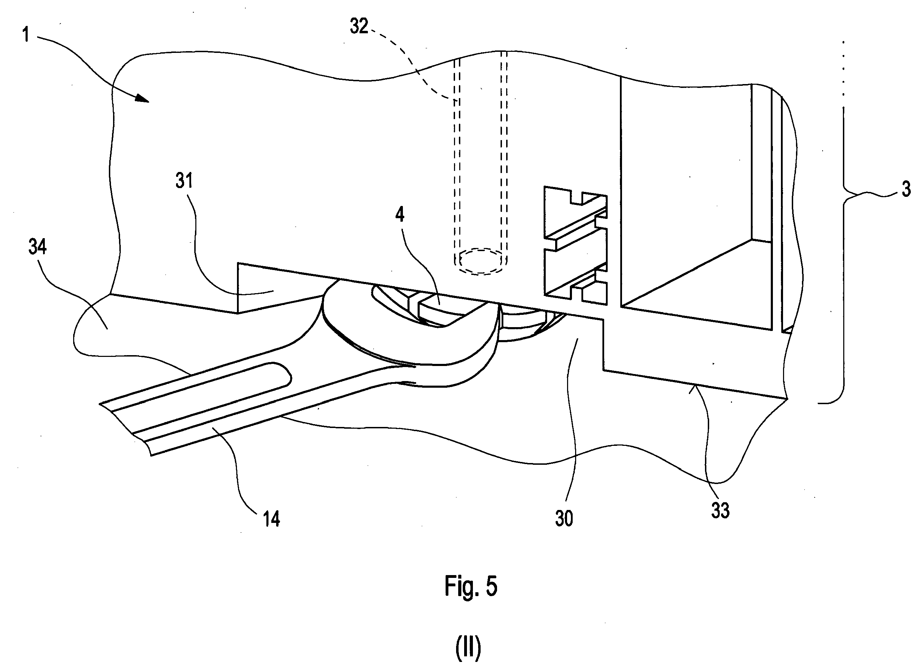

Anhand der Fig. 4 und der Fig. 5 ist außerdem zu erkennen, dass der Boden 3 des Haushaltsgeräts 1 eine von außen zugängliche Aussparung 30 aufweist. Die Fig. 5 zeigt dabei eine Ansicht II aus Fig. 1. Die Aussparung 30 ist zu einem Fußboden 34 hin offen ausgebildet und weist darüber hinaus eine seitliche Öffnung 31 auf. In dem Zustand, dass der Fuß 4 vollständig mit seinem Gewinde 6 in das Gegengewinde 32 (in Fig. 5 gestrichelt dargestellt, weil von außen nicht sichtbar) eingeschraubt ist, ist die Basis 7 vollständig in der Aussparung 30 versenkt und steht damit über eine Unterseite 33 des Bodens 3 nicht über. Steht das Haushaltsgerät 1 auf dem Fußboden 34, so ist die Basis 7 beziehungsweise ein entsprechender Vorsprung 11 lediglich durch die Öffnung 31 hindurch erreichbar, welche in diesem Zustand unterseitig von dem Fußboden 34 begrenzt wird.

Das Gewinde 6 und das Gegengewinde 32 können selbsthemmend miteinander zusammenwirkend vorgesehen sein.

Obwohl die vorliegende Erfindung anhand von Ausführungsbeispielen beschrieben wurde, ist sie vielfältig modifizierbar.

Zusammenfassend betrachtet weist die Basis des jeweiligen Fußes, mit der das Haushaltsgerät an dem Fußboden seines Aufstellorts aufsteht, in Umfangsrichtung (bezogen auf die Drehachse des Fußes) mehrere, durch Materialaussparungen beziehungsweise Lücken voneinander versetzt angeordnete Vorsprünge auf. Die Außenkontur des jeweiligen Vorsprungs ist dabei derart ausgebildet, dass sie zumindest in dem Bereich der beiden Seitenflächen des Vorsprungs der Innenkontur der Seitenflächen der beiden Zinken des Gabelschlüssels weitgehend entspricht. Vorteilhaft kann es insbesondere sein, wenn die Außenkonturform des jeweiligen Vorsprungs insgesamt weitgehend der Innenkonturform des Gabelschlüssels entspricht. Dadurch lässt sich der Gabelschlüssel weitgehend passförmig auf den jeweiligen Vorsprung aufsetzen, so dass durch das formschlüssige Ineinandergreifen von Gabelschlüssel und Vorsprung eine besonders zuverlässige Kraftübertragung zwischen dem Gabelschlüssel und dem Fuß sichergestellt ist. Ein Abrutschen des Gabelschlüssels von dem jeweiligen Vorsprung ist somit weitgehend vermieden.

### Bezugszeichenliste

- 1: Haushaltsgerät
- 2: Gerätekorpus
- 3: Boden
- 4: Fuß
- 5: Schaft
- 6: Gewinde
- 7: Basis
- 10: Grundkörper
- 11: Vorsprung
- 12: Drehachse
- 13: Maul
- 14: Gabelschlüssel
- 15: Ecke
- 16: Seitenfläche
- 17: Abstand
- 20: Ausnehmung
- 21: Zinken
- 22: Grundfläche
- 23: Stellfläche
- 24: Ausnehmung
- 25: Schlitz
- 26: Klinge
- 27: Schraubendreher
- 30: Aussparung
- 31: Öffnung
- 32: Gegengewinde
- 33: Unterseite
- 34: Fußboden

- I: Ansicht
- II: Ansicht
- U: Umfangsrichtung

## Patentansprüche

1. Fuß (4) für ein Haushaltsgerät (1) mit einem Gewinde (6), welches zur Ausrichtung des Haushaltsgeräts (1) in ein Gegengewinde (32) desselben ein- und aus diesem ausschraubbar ist, und mit einer Basis (7) zum Abstützen des Haushaltsgeräts (1) an einem Böden (34), welche mit dem Gewinde (6) drehfest verbunden ist und einen Grundkörper (10) mit mehreren Vorsprüngen (11) aufweist, die von dem Grundkörper (10) abstehen, **dadurch gekennzeichnet, dass** die Vorsprünge (11) eine jeweilige Außenkontur mit planparallelen Seitenflächen (16) zum Ineingriffbringen mit einem Gabelschlüssel (14) für das Ein- und Ausschrauben des Gewindes (6) aufweisen und dass die planparallelen Seitenflächen (16) eines jeweiligen Vorsprungs (11) einen Abstand (17) im Bereich von 8 bis 20 mm aufweisen.

2. Fuß (4) nach Anspruch 1, **dadurch gekennzeichnet, dass** drei bis acht, bevorzugt vier bis sechs Vorsprünge (11) vorgesehen sind.

3. Fuß (4) nach Anspruch 1 oder 2, **dadurch gekennzeichnet, dass** die Vorsprünge (11) jeweils eine von dem Gewinde (6) abgewandte Grundfläche (22) aufweisen, die sich in Richtung des Gewindes (6) krümmt.

4. Fuß (4) nach einem der Ansprüche 1 bis 3, **dadurch gekennzeichnet, dass** die Basis (7) eine Stellfläche (23) für das Abstützen des Haushaltsgeräts (1) auf dem Boden (34) aufweist, an welche sich eine jeweilige Grundfläche (22) eines Vorsprungs (11) anschließt.

5. Fuß (4) nach Anspruch 4, **dadurch gekennzeichnet, dass** der Grundkörper (10) die Stellfläche (23) aufweist.

6. Fuß (4) nach einem der Ansprüche 1 bis 5, **dadurch gekennzeichnet, dass** der Grundkörper (10) einen runden oder eckigen, insbesondere drei-, vier-, fünf- oder sechseckigen Querschnitt aufweist, wobei bevorzugt jeder der Ecken (15) ein Vorsprung (11) zugeordnet ist.

7. Fuß (4) nach einem der Ansprüche 1 bis 6, **dadurch gekennzeichnet, dass** die Vorsprünge (11) jeweils einen Schlitz (25) aufweisen, welcher mit einer Klinge (26) eines Schraubendrehers (27) für das Ein- und Ausschrauben des Gewindes (6) in Eingriff bringbar ist.

8. Fuß (4) nach Anspruch 7, **dadurch gekennzeichnet, dass** sich ein jeweiliger Schlitz (25) radial in Bezug auf eine Drehachse (12) des Gewindes (6) erstreckt.

9. Fuß (4) nach Anspruch 7 oder 8, **dadurch gekennzeichnet, dass** sich ein jeweiliger Schlitz (25) mittig in einem jeweiligen Vorsprung (11) erstreckt.

10. Haushaltsgerät (1) mit mindestens einem Fuß (4) nach einem der Ansprüche 1 bis 9 und einem zugeordneten Gegengewinde (32), in welches das Gewinde (6) des Fußes (4) eingeschraubt ist.

11. Haushaltsgerät (1) nach Anspruch 10, **dadurch gekennzeichnet, dass** ein Boden (3) vorgesehen ist, welcher mit dem Gegengewinde (32) versehen ist.

12. Haushaltsgerät (1) nach Anspruch 11, **dadurch gekennzeichnet, dass** das Gegengewinde (32) in einer Aussparung (30) in dem Boden (3) mündet, so dass der Fuß (4) in das Gegengewinde (32) derart einschraubbar ist, dass die Basis (7) zumindest teilweise in der Aussparung (30) versenkbar ist.

13. Haushaltsgerät (1) nach einem der Ansprüche 10 bis 12, **dadurch gekennzeichnet, dass** das Gewinde (6) und Gegengewinde (32) selbsthemmend zusammenwirken.

14. Haushaltsgerät (1) nach einem der Ansprüche 10 bis 13, **dadurch gekennzeichnet, dass** das Haushaltsgerät (1) als Geschirrspüler, Herd, Kühlgerät oder Waschmaschine ausgebildet ist.

## Claims

1. Foot (4) for a household appliance (1) having a thread (6) which for directing the household appliance (1) into a mating thread (32) thereof can be screwed into and unscrewed therefrom, and having a base (7) for supporting the household appliance (1) on a floor (34), said base being non-rotatably connected to the thread (6) and having a base body (10) with a plurality of projections (11) projecting from the base body (10), **characterised in that** the projections (11) have a respective outer contour with coplanar lateral surfaces (16) for engaging with a fork spanner (14) for screwing and unscrewing the thread (6), and **in that** the coplanar lateral surfaces (16) of a respective projection (11) have a spacing (17) in the range between 8 and 20 mm.

2. Foot (4) according to claim 1, **characterised in that** three to eight, preferably four to six projections (11) are provided.

3. Foot (4) according to claim 1 or 2, **characterised in that** the projections (11) each have a base surface (22) which faces away from the thread (6) and curves in the direction of the thread (6).

4. Foot (4) according to one of claims 1 to 3, **characterised in that** the base (7) has a footprint (23) for supporting the household appliance (1) on the floor (34), against which a respective base surface (22) of a projection (11) abuts.

5. Foot (4) according to claim 4, **characterised in that** the base body (10) has the footprint (23).

6. Foot (4) according to one of claims 1 to 5, **characterised in that** the base body (10) has a round or angular, in particular triangular, quadrangular, pentagonal or hexagonal cross-section, wherein each of the corners (15) is preferably assigned a projection (11).

7. Foot (4) according to one of claims 1 to 6, **characterised in that** the projections (11) each have a slot (25) which can engage with a blade (26) of a screwdriver (27) for screwing and unscrewing the thread (6).

8. Foot (4) according to claim 7, **characterised in that** a respective slot (25) extends radially in respect of a rotational axis (12) of the thread (6).

9. Foot (4) according to claim 7 or 8, **characterised in that** a respective slot (25) extends centrally in a respective projection (11).

10. Household appliance (1) having at least one foot (4) according to one of claims 1 to 9 and an associated mating thread (32), into which the thread (6) of the foot (4) is screwed.

11. Household appliance (1) according to claim 10, **characterised in that** a floor (3) is provided, which is provided with the mating thread (32).

12. Household appliance (1) according to claim 11, **characterised in that** the mating thread (32) opens out into a cut-out (30) in the floor (3), so that the foot (4) can be screwed into the mating thread (32) such that the base (7) can be countersunk at least partially in the cut-out (30).

13. Household appliance (1) according to one of claims 10 to 12, **characterised in that** the thread (6) and mating thread (32) interact in a self-locking manner.

14. Household appliance (1) according to one of claims 10 to 13, **characterised in that** the household appliance (1) is embodied as a dishwasher, cooker, refrigerator or washing machine.

## Revendications

1. Pied (4) pour un appareil ménager (1) avec un filet (6), qui peut être vissé dans un filet opposé (32) et dévissé de celui-ci pour l'orientation de l'appareil ménager (1), et avec une base (7) pour appuyer l'appareil ménager (1) sur un sol (34), qui est assemblée de façon fixe en rotation avec le filet (6) et qui présente un corps de base (10) avec plusieurs saillies (11), qui partent du corps de base (10), **caractérisé en ce que** les saillies (11) présentent un contour extérieur respectif avec des faces latérales planes parallèles (16) pour l'engagement d'une clé à fourche (14) permettant de visser et de dévisser le filet (6), et **en ce que** les faces latérales planes parallèles (16) d'une saillie respective (11) présentent une distance (17) de l'ordre de 8 à 20 mm.

2. Pied (4) selon la revendication 1, **caractérisé en ce qu'**il est prévu trois à huit, de préférence quatre à six saillies (11).

3. Pied (4) selon la revendication 1 ou 2, **caractérisé en ce que** les saillies (11) présentent respectivement une face de base (22) située à l'opposé du filet (6), qui s'incurve en direction du filet (6).

4. Pied (4) selon l'une quelconque des revendications 1 à 3, **caractérisé en ce que** la base (7) présente une face de pose (23) pour l'appui de l'appareil ménager (1) sur le sol (34), à laquelle se raccorde une face de base respective (22) d'une saillie (11).

5. Pied (4) selon la revendication 4, **caractérisé en ce que** le corps de base (10) présente la face de pose (23).

6. Pied (4) selon l'une quelconque des revendications 1 à 5, **caractérisé en ce que** le corps de base (10) présente une section transversale ronde ou polygonale, en particulier triangulaire, quadrangulaire, pentagonale ou hexagonale, dans lequel une saillie (11) est de préférence associée à chacun des angles (15).

7. Pied (4) selon l'une quelconque des revendications 1 à 6, **caractérisé en ce que** les saillies (11) présentent chacune une fente (25), qui peut être mise en prise avec une lame (26) d'un tournevis (27) pour le vissage et le dévissage du filet (6).

8. Pied (4) selon la revendication 7, **caractérisé en ce qu'**une fente respective (25) s'étend radialement par rapport à un axe de rotation (12) du filet (6).

9. Pied (4) selon la revendication 7 ou 8, **caractérisé en ce qu'**une fente respective (25) s'étend au milieu d'une saillie respective (11).

10. Appareil ménager (1) avec au moins un pied (4) selon l'une quelconque des revendications 1 à 9 et un filet opposé associé (32), dans lequel le filet (6) du pied (4) est vissé.

11. Appareil ménager (1) selon la revendication 10, **caractérisé en ce qu'**il est prévu un fond (3), qui est doté du filet opposé (32).

12. Appareil ménager (1) selon la revendication 11, **caractérisé en ce que** le filet opposé (32) débouche dans une découpe (30) dans le fond (3), de telle manière que le pied (4) puisse être vissé dans le filet opposé (32), de telle manière que la base (7) puisse être abaissée au moins partiellement dans la découpe (30).

13. Appareil ménager (1) selon l'une quelconque des revendications 10 à 12, **caractérisée en ce que** le filet (6) et le filet opposé (32) coopèrent de façon autobloquante.

14. Appareil ménager (1) selon l'une quelconque des revendications 10 à 13, **caractérisé en ce que** l'appareil ménager (1) est constitué par un lave-vaisselle, une cuisinière, un réfrigérateur ou un lave-linge.
